# EUROPÄISCHE PATENTSCHRIFT

(11) **EP 0 470 389 B1**
(45) Veröffentlichungstag und Bekanntmachung des Hinweises auf die Patenterteilung: **10.05.1995**
(21) Anmeldenummer: 91111576.4
(22) Anmeldetag: 11.07.1991
(51) Int. Cl.: D06H 3/12

(54) **Vorrichtung zur Messung der Schussfaden- oder Maschenreihenlage bei Textilbahnen**
Device for measuring the position of weft threads or rows of stitches in textile webs
Dispositif pour mesurer la position de fils de trame ou rangées de mailles dans les bandes textiles

(30) Priorität: 10.08.1990 DE 4025444; 16.10.1990 DE 4032847
(43) Veröffentlichungstag der Anmeldung: 12.02.1992
(73) Patentinhaber: Mahlo GmbH & Co. KG, D-93342 Saal (DE)
(72) Erfinder: Gassner, Erwin, W-8424 Saal/Do. (DE)
(74) Vertreter: Bohnenberger, Johannes, Dr.

(56) Entgegenhaltungen:
- EP-A- 0 262 525
- EP-A- 0 291 729
- DE-B- 1 109 636

## Beschreibung

Die Erfindung betrifft eine Vorrichtung zur Messung der Schußfaden- oder Maschenreihenlage bei Textilbahnen nach dem Oberbegriff des Patentanspruches 1.

Aus der DE-AS 11 09 636 ist eine derartige Vorrichtung bekannt, bei welcher zwei linienförmige Bereiche gleichzeitig überwacht werden, wobei die Längsachsen der linienförmigen Bereiche zueinander spitzwinklig verlaufen und die Winkelhalbierende zwischen den beiden Längsachsen einem korrekten (zur Förderrichtung rechtwinkligen) Schußfadenverlauf entspricht. Ein Vergleich der Lichtintensitäten, die über die beiden linienförmigen Bereiche hinweg gemessen werden, ergibt ein Maß für den Verlauf der Schußfäden bzw. der Maschenreihenlagen der beobachteten Textilbahn. Sind die beiden Lichtintensitäten identisch, so wird von einer korrekten Schußfadenlage ausgegangen. Ein Problem bei der bekannten Anordnung wird darin gesehen, daß die Auflösung bei der Herleitung der Verzugswinkel, abhängig von der Art der überwachten Ware, manchmal nicht ausreicht.

Aus der EP 0 262 525 A1 ist eine andere Alternative der eingangs genannten Vorrichtung bekannt, bei welcher nur ein einziger linienförmiger Bereich überwacht wird, wobei dieser allerdings in seiner Winkellage zur Schußfaden- oder Maschenreihenlage ständig (oszillierend) verstellt wird. Es erfolgt also auch hier eine Abtastung mehrerer linienförmiger Bereiche, allerdings zeitlich nacheinander. Durch diese bekannte Anordnung wird zwar eine erhöhte Auflösung erzielt, jedoch birgt die Verstellmechanik einige Schwierigkeiten in sich, wobei auch das zeitliche Nacheinander der Meßwertbildung abhängig von der Art der betrachteten Ware nachteilig ist.

Der Erfindung liegt die Aufgabe zugrunde, eine Vorrichtung der eingangs genannten Art dahingehend weiterzubilden, daß eine erhöhte Genauigkeit der erzielbaren Messung ohne enge Einschränkung auf die Art der betrachteten Ware erzielbar ist.

Diese Aufgabe wird durch die im Kennzeichen des Anspruchs 1 angegebenen Merkmale gelöst.

Ein wesentlicher Punkt der Erfindung liegt darin, daß einerseits eine Vielzahl von linienförmigen Bereichen mit verschiedenen Winkellagen gleichzeitig beobachtet wird, andererseits nur eine einzige Linsenanordnung Verwendung findet. Durch die Verwendung einer einzigen Linsenanordnung ergibt sich ein erheblich höherer Gleichlauf der einzelnen Meßabschnitte (linienförmigen Bereiche), der wiederum unabdingbare Voraussetzung für die Erzielung exakter Meßergebnisse ist.

Bei einer ersten bevorzugten Ausführungsform der Erfindung ist der zur Längsachse der Toroidlinse senkrechte Linsenkrümmungsradius über die Linsenlänge unterschiedlich ausgebildet. Er geht von einem ersten Linsenradius in der Linsenmitte in einen davon verschiedenen zweiten Linsenradius an den Linsenenden und symmetrisch von der Linsenmitte aus über. Dadurch kann eine unterschiedliche Empfindlichkeit für verschiedene Verzugswinkel eingestellt werden.

Eine weitere Einstellmöglichkeit für die Empfindlichkeit der Anordnung, insbesondere in bezug auf auftretende Nebenmaxima, wie sie beispielsweise in der EP 0 262 525 A1 erläutert werden, besteht darin, die Längskrümmung der Toroidlinse von einem ersten Längskrümmungsradius in der Linsenmitte in einen zweiten, davon verschiedenen Längskrümmungsradius an den Linsenenden (symmetrisch) übergehen zu lassen. Die Längsachse der Toroidlinse wird dann vom Halbkreis zum "Korbbogen" oder zum Parabelabschnitt. Abhängig von der zu betrachtenden Ware kann sowohl die eine als auch die andere Form Vorteile haben.

Die Lichtempfängereinrichtung umfaßt vorzugsweise eine Spaltblende, deren Längsachse im wesentlichen parallel zur Längsachse der Toroidlinse verläuft. Die Breite der Spaltblende geht bei einer zweiten bevorzugten Ausführungsform der Erfindung von einer ersten Spaltbreite in der Spaltblendenmitte in eine zweite, davon verschiedene zweite Spaltbreite an den Spaltenden über. Dadurch ergibt sich eine ähnliche Einstellungsmöglichkeit für die Empfindlichkeit, wie sie durch verschiedene Linsenkrümmungsradien der Toroidlinse erzielbar ist. Die Herstellung verschiedenartiger, der jeweils zu betrachtenden Ware angepaßter Spaltblenden ist jedoch einfacher als die Herstellung von Toroidlinsen mit über ihre Länge variierenden Linsenkrümmungsradien.

Die Linsenanordnung und/oder die Spaltblende sind vorzugsweise zur Anpassung auf die Warenstruktur der Textilbahn austauschbar befestigt. Bei einer anderen Ausführungsform der Erfindung ist die Spaltblende (von Hand oder mechanisch, ggf. automatisch angesteuert) einstellbar. Während bisher eine Anpassung der Spaltanordnung relativ zur Warenbahn praktisch nicht möglich war, ist dies nunmehr sehr leicht durchführbar. Insbesondere bei Anwendungsfällen, in denen immer dieselbe, allerdings hinsichtlich ihres Schußfadenverlaufes schwer überwachbare Ware beobachtet wird (z.B. Teppichherstellung), also nicht wie z.B. in einer Färberei ständig wechselnde Warenqualitäten vorliegen, eignet sich die Anpassung eines Meßsystems durch Einbau eines auf die Ware angepaßten Optik-Systems, ohne daß unvertretbar hohe Preise entstünden.

Diese Austauschbarkeit ist besonders einfach dann sicherzustellen, wenn die Lichtempfängereinrichtung eine Vielzahl von Photosensoren umfaßt, welche die Lichtintensität innerhalb aufeinanderfolgender linienförmiger Bereiche entlang der Toroidlinsen-Längsachse in elektrische Ausgangssignale wandeln, die in einer Auswerteinrichtung zur Erzeugung eines Verzugswinkelsignals miteinander verknüpfbar sind. Derartige aufeinanderfolgende linienförmige Bereiche lassen sich nämlich sehr leicht durch eine Vielzahl (aufeinanderfolgender) lichtempfindlicher Abschnitte eines einzigen Halbleitersubstrates herstellen. Wenn man die Breite der nebeneinander liegenden lichtempfindlichen Abschnitte einer Reihe von Photosensoren entsprechend einer zu überwachenden Länge der linienförmigen Bereiche ausbildet und die in Richtung zur Photosensoren-Reihe senkrechte Länge der einzelnen Photosensoren relativ hoch wählt, so kann ein einziger Typ von "Vielfach-Photosensor" mit nachfolgender Auswertelektronik zusammen mit verschiedenen Linsen-/ Spaltblendenanordnungen verwendet werden.

Die Auswerteinrichtungen sind so ausgebildet, daß die Ausgangssignale der Photosensoren (nach einer Vorverstärkung) für jeden Photosensor gesondert einstellbar sind. Dadurch kann ein optimaler Gleichlauf der einzelnen Meßkanäle sichergestellt werden, der zur Erzielung einer optimalen Meßgenauigkeit wichtig ist.

Bei einer ersten Ausführungsform der Erfindung werden die Ausgangssignale in parallelen Kanälen weiterverarbeitet. Bei einer anderen Ausführungsform der Erfindung ist eine Multiplexer-Einrichtung vorgesehen, welche die Ausgangssignale nacheinander abtastet und mit programmierbaren Verstärkungsfaktoren zur weiteren Auswertung verstärkt. Dadurch ist gewährleistet, daß auch bei Verwendung von Bauteilen sehr niedriger Toleranzen zur Erzielung eines optimalen Gleichlaufs zwischen den Kanälen kostengünstig gearbeitet werden kann.

Eine besonders interessante Verwendung der hier gezeigten Vorrichtung liegt in der Zählung von Faden- oder Maschenreihen-Zahlen pro Längeneinheit des Gewebes. Bei den bisher bekannten Systemen, bei denen die Frequenz (bei konstanter Bewegungsgeschwindigkeit des Gewebes) eines Detektor-Ausgangssignals überwacht wird, ändert sich der Signal-/ Rauschabstand, genauer gesagt die Amplitude des im Ausgangssignal enthaltenen Wechselstromanteils mit dem Verzugswinkel. Bei Verwendung der vorliegenden Erfindung wird hingegen immer ein streifenförmiger Bereich bzw. ein Sensor relativ zu den zu überwachenden Fäden bzw. Maschenreihen derart liegen, daß ein optimaler Signal-/ Rauschabstand für das Ausgangssignal dieses Sensors gewährleistet ist. Bei einer weiteren bevorzugten Ausführungsform der Erfindung bei dieser Anwendung wird nur ein einziger (großflächiger) Sensor zusammen mit der beschriebenen Linsen-/ Blendenanordnung vorgesehen. Die Welligkeit des Ausgangssignals, also der die Fadenzahl bestimmende Parameter im Ausgangssignal ist im wesentlichen unabhängig vom Verzugswinkel in der betrachteten Textilbahn, so daß die nachfolgende Signalauswertung erheblich vereinfacht wird.

Weitere wesentliche Merkmale ergeben sich aus den Unteransprüchen und der nachfolgenden Beschreibung von Ausführungsformen der Erfindung, die anhand von Abbildungen näher erläutert werden. Hierbei zeigen
- Fig. 1: einen schematisierten Querschnitt durch eine Ausführungsform der Erfindung zur Erläuterung des Grob-Aufbaus,
- Fig. 2: eine perspektivische Darstellung einer Ausführungsform der Erfindung zur Erläuterung der Relativpositionierung zwischen Linse, Blende und Photosensoren,
- Fig. 3: eine Draufsicht auf eine Blende nach Fig. 2,
- Fig. 4: eine Draufsicht auf eine Toroidlinse nach Fig. 2,
- Fig. 5: einen Schnitt entlang der Linie V-V aus Fig. 4,
- Fig. 6: eine Draufsicht auf einen Photosensor nach Fig. 2,
- Fig. 7: eine Draufsicht auf eine andere Ausführungsform einer Toroidlinse,
- Fig.8-10: Schnittdarstellungen entlang der Linien VIII-X aus Fig. 7,
- Fig. 11: eine andere Ausführungsform einer Blende in Draufsicht ähnlich der nach Fig. 3,
- Fig. 12: eine Draufsicht auf eine weitere Ausführungsform einer Toroidlinse mit schematisiert (durchbrochene Linie) eingezeichnetem Spalt einer Spaltblende, und
- Fig. 13: ein schematisiertes Blockschaltbild einer Ausführungsform der Erfindung.

Bei der nachfolgenden Darstellung werden für die gleichen oder gleich wirkenden Elemente dieselben Bezugsziffern verwendet.

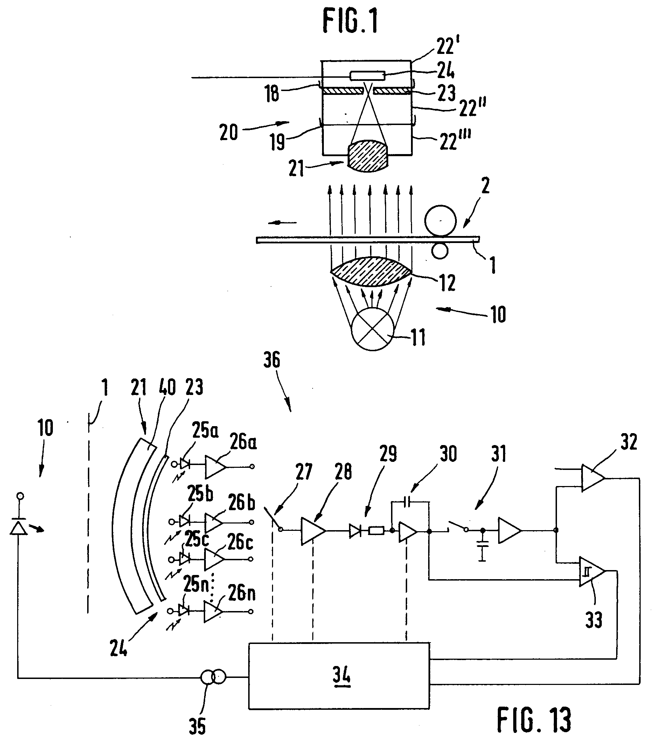

Wie in Fig. 1 gezeigt, umfaßt die Erfindung eine Beleuchtungseinrichtung 10, die das von einer Lichtquelle 11 ausgestrahlte Licht mittels einer Optik 12 bündelt und durch eine zu überwachende Textil-Ware 1 hindurchschickt. Die Ware 1 wird mittels einer Transporteinrichtung 2 in Richtung des in Fig. 1 gezeichneten Pfeiles transportiert.

Das durch die Ware 1 hindurchtretende Licht gelangt zu einer Meßanordnung 20 und wird dort mittels einer Linsenanordnung 21 durch eine Spaltblende 23 hindurch auf eine Lichtempfängereinrichtung 24 geführt. Selbstverständlich ist es auch mölich, anstelle einer Durchlicht-Beleuchtung eine Auflicht-Beleuchtung zu verwenden, wie dies aus den eingangs genannten Druckschriften auch bekannt ist.

Das Gehäuse, welches die Linsenanordnung 21, die Blende 23 und die Lichtempfängereinrichtung 24 enthält, ist in drei voneinander lösbare Abschnitte geteilt, wobei der oberste Abschnitt 22' die Lichtempfängereinrichtung 24 und ggf. einen wesentlichen Teil der weiteren Elektronik enthält, der mittlere Abschnitt 22' die Spaltblende 23 und der unterste Gehäuseteil 22''' die Linsenanordnung 21 trägt. Die drei Gehäuseteile 22'-22''' sind über Befestigungseinrichtungen 18, 19 miteinander lösbar verbunden, so daß sowohl die Linsenanordnung 21 gegen eine andere, der zu untersuchenden Ware anzupassende anders geformte Linsenanordnung ersetzbar ist als auch die Blendeneinrichtung 23, während die Lichtempfängereinrichtung 24 nicht ausgetauscht wird.

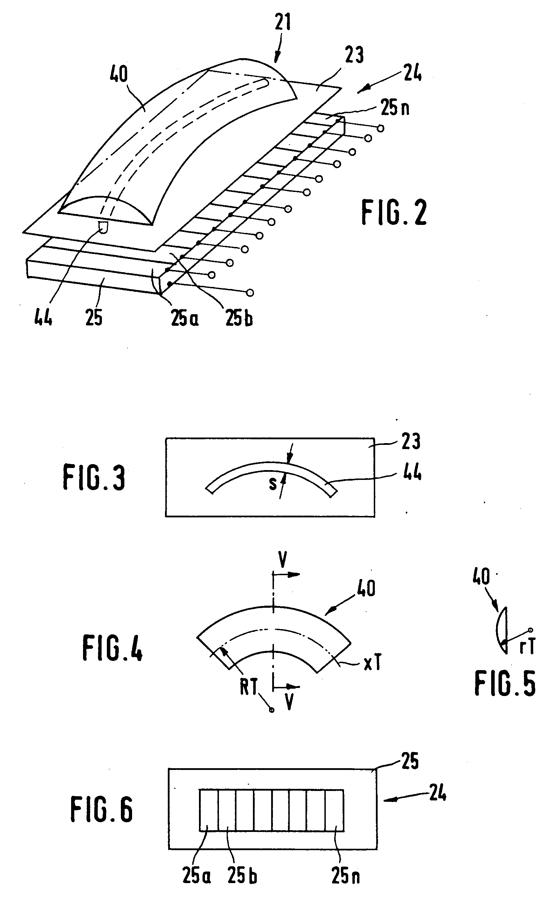

Aus Fig. 2 geht in schematisierter Darstellung die ungewöhnliche Form der erfindungsgemäß verwendeten Linse hervor. Diese ist als Toroidlinse 40 ausgebildet, weist also dem Prinzip nach zunächst die Form einer Zylinderlinse auf, welche dann allerdings keine linere Längsachse, sondern eine gekrümmte Längsachse aufweist. Dementsprechend ist auch der Spalt 44 der Spaltblende 23 mit einer gekrümmten Längsachse ausgebildet, wobei die Längsachse des Spaltes 44 und die Längsachse der Toroidlinse 40 im wesentlichen parallel zueinander verlaufen.

Die Lichtempfängereinrichtung 24 umfaßt ein (einziges) Halbleitersubstrat 25, auf welchem nebeneinanderliegend eine Vielzahl von streifenförmigen Photosensoren 25a-25n ausgebildet ist. Jeder dieser Photosensoren ist einzeln kontaktiert und hat somit einen Ausgangsanschluß. Es ist zwar möglich, diese Photosensoren auch als Einzelbauteile dicht nebeneinander anzuordnen, jedoch sind derartige Sensor-Zeilen sehr genau herstellbar und auch auf dem Markt erhältlich. Wie aus Fig. 2 ersichtlich, wird durch die Breite der einzelnen Photosensor-Streifen 25a-25n die Länge der jeweils zu überwachenden Bereiche definiert, wobei die in den beiliegenden Zeichnungen dargestellten Größenverhältnisse nicht der Wirklichkeit entsprechen, sondern aus zeichnerischen Gründen so gewählt wurden. Im allgemeinen ist die Länge (entsprechend der Photosensor-Breite) wesentlich größer als die Breite des überwachten Bereiches, welche durch die Breite S (siehe Fig.3) des Spaltes 44 der Spaltblende 23 definiert wird.

Bei der in Fig.2 gezeigten Darstellung ist die Längsachse XT der Toroidlinse 40 gleichmäßig gekrümmt, weist also einen Krümmungsradius RT auf (siehe Fig.4). Dieser Krümmungsradius RT fällt auch mit dem Krümmungsradius des Spaltes 44 zusammen (siehe Fig.3), wobei die Länge der Photosensor-Streifen 25a-25n auf dem Halbleitersubstrat 25 so gewählt ist (siehe Fig. 6), daß der Spalt 44 vollständig auf die lichtempfindliche Einrichtung 24 fällt. Weiterhin weist die Toroidlinse 40 einen über ihre Länge gleichmäßigen Linsenkrümmungsradius rT (siehe Fig.5) auf, so daß im wesentlichen gleichmäßige optische Verhältnisse über dem gesamten betrachteten Winkelbereich vorliegen. Dies gilt insbesondere dann, wenn die Länge der Toroidlinse kurz im Vergleich zum Längskrümmungsradius RT ist.

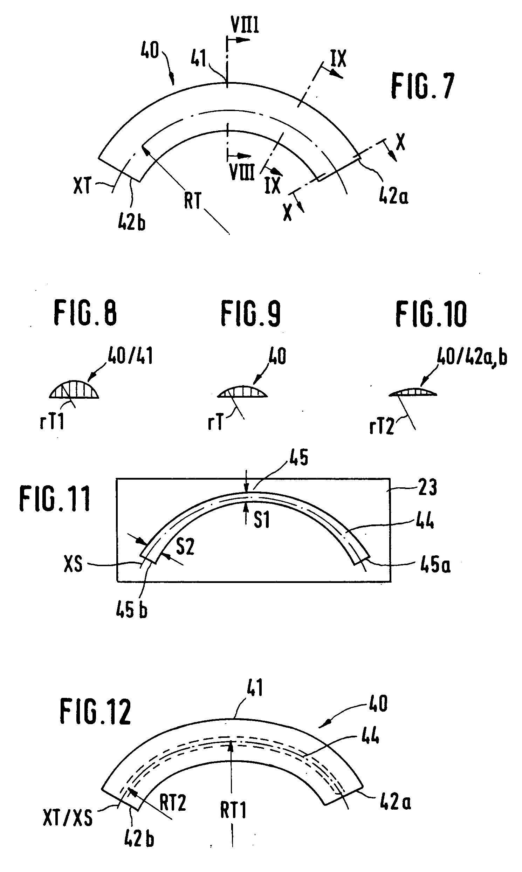

Bei einer anderen bevorzugten Ausführungsform der Linse, die in den Fig.7-10 erläutert ist, weicht der Linsenkrümmungsradius rT1 in der Mitte 41 der Toroidlinse 40 vom Linsenkrümmungsradius rT2 an den Enden 42a und 42b der Toroidlinse 40 ab. Hierbei geht der eine (innere) Krümmungsradius rT1 stufenlos in den zweiten (äußeren) Krümmungsradius rT2 über. Bei Verwendung einer derartigen "exotischen" Toroidlinse lassen sich besonders schwierig zu untersuchende textile Waren mit erhöhter Genauigkeit messen.

Eine weitere Variation der Meßempfindlichkeit über den Verzugswinkel ähnlich der nach Fig.7 ergibt sich dann, wenn eine Spaltblende 23 Verwendung findet, wie sie in Fig.11 schematisiert dargestellt ist. Bei dieser Spaltblende 23 ist die Spaltbreite S1 in der Mitte 45 des Spaltes 44 geringer als an den Enden 45a, 45b. Die Spaltbreite S1 in der Mitte des Spaltes 44 weicht also von der Spaltbreite S2 an den Enden 45a, 45b ab. Hierdurch ist eine erhöhte Empfindlichkeit bei kleinen Verzugswinkeln erzielbar, so daß man einerseits einen hohen Dynamikbereich (Einfangbereich für große Verzugswinkel), andererseits eine hohe Genauigkeit bei geringen Verzugswinkeln erzielen kann.

Diese vorgenannte winkelabhängige Empfindlichkeit kann dadurch verstärkt werden, daß die Längsachse XT der Toroidlinse 40 bzw. die Längsachse XS des Spaltes 44 der Spaltblende 23 ungleichmäßig gekrümmt sind, so daß der Krümmungsradius RT1 in der Mitte 41 der Toroidlinse 40 von der Länge des Radius RT2 an den Enden 42a, 42b abweicht. In Fig.12 ist eine Korbbogen-Form gezeigt, die bei verschiedenen Warenarten zu einer Erhöhung der Verzugswinkel-Empfindlichkeit bei niedrigen Verzugswinkeln führt. Wenn man den Verlauf der Längsachsen XT und XS der Toroidlinse 40 bzw. des Spaltes 44 wählt, so ergibt sich wiederum eine verzugswinkelabhängige Empfindlichkeitsänderung, insbesondere auch der warenabhängigen Nebenmaxima.

Anstelle der bisher beschriebenen, feststehenden Photosensoren 25a-25n auf einem einzelnen Halbleitersubstrat 25 kann man natürlich auch einen einzelnen streifenförmig ausgebildeten Photosensor verwenden, der entsprechend der EP 0 262 525 A1 bewegt wird. Auch ist es möglich, mehrere Photosensoren, deren linienförmige Bereiche winklig zueinander stehen, zu verwenden, die ebenfalls bewegt werden, wie dies beispielsweise aus der DE-PS 16 35 266 bekannt ist. Bei allen diesen Systemen mit bewegten Photosensoren wird der Vorteil erzielt, daß die Linsenanordnung und/oder die Spaltblende nicht mitbewegt werden müssen. Dadurch ergibt sich die Möglichkeit einer erhöhten Arbeitsfrequenz, wobei weiterhin die z.B. anhand der Fig. 7-12 erläuterten Vorteile verzugswinkelabhängiger Empfindlichkeitseigenschaften beibehalten bleiben.

In Fig. 13 ist ein Blockschaltbild einer Ausführungsform der Erfindung gezeigt. Hierbei ist die Beleuchtungseinrichtung 10 schematisiert als (einzelne) Leuchtdiode dargestellt, welche über einen Lichttreiber 35 von einer Logikschaltung 34 (Mikroprozessor) angesteuert wird. Dadurch soll versinnbildlicht werden, daß die Beleuchtungseinrichtung entsprechend der Vielzahl von Photosensoren so ausgebildet sein kann, daß der beleuchtete Bereich der Ware 1 inhomogen, den Photosensoren bzw. deren Empfindlichkeit (einschl. der nachfolgenden Elektronikschaltung) entsprechend ausgeleuchtet werden kann. Dadurch ergibt sich eine vergrößerte Variabilität bei der Anpassung der Meßeinrichtung auf die Ware.

Das von der Beleuchtungseinrichtung 10 ausgesandte und durch die Ware 1 hindurchgelassene Licht gelangt durch die Linsenanordnung 21 mit der Toroidlinse 40 auf die Lichtempfängereinrichtung 24 mit der Spaltblende 23 und den Photosensoren 25a-25d. Den Photosensoren 25a-25d sind Vorverstärker 26a-26d nachgeschaltet, deren Ausgänge auf den Eingängen eines Multiplexers 27 liegen, der von der Logikschaltung 34 zum Umschalten angesteuert wird.

Der Ausgang des Multiplexers 27 liegt auf dem Eingang eines Verstärkers 28, dessen Verstärkungs-/ Dämpfungsfaktor von der Logikschaltung 34 eingestellt werden kann. Je nach Schaltstellung des Multiplexers 27 kann somit ein in der Logikschaltung 34 gespeicherter Verstärkungswert eingestellt werden, so daß bei gleichen Lichtintensitäten an den Sensoren 25a-25n gleiche Ausgangssignal-Amplituden am Ausgang des Verstärkers 28 anstehen.

Der Ausgang des Verstärkers 28 liegt auf dem Eingang eines Effektivwertbildners 29, der in der vorliegenden Schaltung als Reihenschaltung aus Diode und Widerstand dargestellt ist. Der Effektivwert wird auf den Eingang eines Integrators 30 geführt, der wiederum über die Logikschaltung 34 einstellbar ist.

Das integrierte Meßwert-Ausgangssignal wird von einer sample & hold-Schaltung 31 abgetastet. Der Ausgang der sample & hold-Schaltung 31 wird einerseits über einen Wandler 33 auf einen (Analog-)Eingang der Logikschaltung 34 geführt, andererseits auf einen Eingang eines Referenzwertgebers 32, an dessen anderem Eingang ein Referenzsignal ansteht. Das Ausgangssignal des Referenzwertgebers 32 ist auf einen weiteren (Analog-)Eingang der Logikschaltung 34 geführt. Die Gesamtanordnung bildet somit eine Auswerteinrichtung 36.

Die eigentliche Meßwert-Abtastung geschieht durch Analyse der Signale aus dem Wandler 33. Über den Ausgang des Referenzwertgebers 32 läßt sich ein Abgleich der einzelnen Kanäle durchführen, so daß gleiche (Verstärkungs-) Frequenzgänge der einzelnen Meßkanäle und auch ein Dunkel-Abgleich durchführbar sind. Dieser Abgleich kann selbsttätig erfolgen, wobei insbesondere die Steuerung der Beleuchtungseinrichtung 10 durch die Logikschaltung 34 von Vorteil ist.

Ein wesentlicher Vorteil der Erfindung liegt - wie sich dies obigen Ausführungen entnehmen läßt - darin, daß mit relativ geringem Aufwand eine Vielzahl von exakt gleichlaufenden Meßkanälen entsprechend verschiedenen Winkeln der betrachteten linienförmigen Bereiche einstellen läßt. Darüber hinaus ist die Vorrichtung leicht an besondere, warenimmanente Eigenschaften anpaßbar, da mit einer einzigen Lichtempfängereinrichtung 24 und nachgeschalteter Auswerteinrichtung 36 eine Vielzahl von Linsenanordnungen 21 und/oder Spaltblenden 23 verwendbar ist.

## Patentansprüche

1. Vorrichtung zur Messung der Schußfaden- oder Maschenreihenlage bei Textilbahnen, mit einer Durchlicht- oder Auflichtmeßanordnung, umfassend mindestens eine Linsenanordnung (21) und mindestens eine Lichtempfängereinrichtung (24) zur Messung des von der zu prüfenden Ware in einem im wesentlichen linienförmigen Bereich hindurchgelassenen bzw. reflektierten Lichtes einer Beleuchtungseinrichtung (10), wobei die Meßanordnung derart ausgebildet ist, daß entweder mindestens zwei linienförmige, winklig zueinander verlaufende Bereiche oder ein in seiner Winkellage zur Schußfaden- oder Maschenreihenlage verstellbarer linienförmiger Bereich überwachbar sind,
**dadurch gekennzeichnet**,
daß die Linsenanordnung (21) eine unbewegliche, in ihrer Längsachse (XT) gebogene Zylinderlinse (40) bzw. Toroidlinse umfaßt, deren Längsachse (XT) mit den zu überwachenden linienförmigen Bereichen abschnittsweise im wesentlichen übereinstimmt.

2. Vorrichtung nach Anspruch 1,
**dadurch gekennzeichnet**,
daß der zur Längsachse (XT) der Toroidlinse (40) senkrechte Linsenkrümmungsradius (rT) in einem ersten Linsenradius (rT1) in der Linsenmitte (41) in einen davon verschiedenen zweiten Linsenradius (rT2) an den Linsenenden (42a, 42b) übergeht.

3. Vorrichtung nach einem der vorhergehenden Ansprüche,
**dadurch gekennzeichnet**,
daß die Längskrümmung der Toroidlinse (40) von einem ersten Längskrümmungsradius (RT1) in der Linsenmitte (41) in einen zweiten, davon verschiedenen Längskrümmungsradius (RT2) an den Linsenenden (42a, 42b) übergeht.

4. Vorrichtung nach einem der vorhergehenden Ansprüche,
**dadurch gekennzeichnet**,
daß die Lichtempfängereinrichtung (24) eine Spaltblende (23) umfaßt, deren Längsachse (XS) im wesentlichen parallel zur Längsachse (XT) der Toroidlinse (40) verläuft.

5. Vorrichtung nach Anspruch 4,
**dadurch gekennzeichnet**,
daß die Breite (S) der Spaltblende (23) von einer ersten Spaltbreite (S1) in der Spaltblendenmitte (45) in eine zweite, davon verschiedene Spaltbreite (S2) an den Spaltblendenenden (46a, 46b) übergeht.

6. Vorrichtung nach einem der Ansprüche 4 oder 5,
**dadurch gekennzeichnet**,
daß die Spaltblende (23) zur Anpassung an die Warenstruktur der Textilbahn austausch-/einstellbar befestigt ist.

7. Vorrichtung nach einem der vorhergehenden Ansprüche,
**dadurch gekennzeichnet**,
daß die Linsenanordnung (21) zur Anpassung an die Warenstruktur der Textilbahn austauschbar befestigt ist.

8. Vorrichtung nach einem der vorhergehenden Ansprüche,,
**dadurch gekennzeichnet**,
daß die Lichtempfängereinrichtung (24) eine Vielzahl von Photosensoren (25a-25n) umfaßt, welche die Lichtintensität innerhalb aufeinanderfolgender linienförmiger Bereiche entlang der Toroidlinsen-Längsachse (XT) in elektrische Ausgangssignale wandeln, die in einer Auswerteinrichtung (36) zur Erzeugung eines Verzugswinkelsignals miteinander verknüpfbar sind.

9. Vorrichtung nach Anspruch 8,
**dadurch gekennzeichnet**,
daß die Auswerteinrichtung (36) zur Erzeugung verstärkter Ausgangssignale Verstärkereinrichtungen (28) umfaßt, deren Verstärkungsfaktoren für jeden Photosensor (25a-25n) gesondert einstellbar sind.

10. Vorrichtung nach Anspruch 9,
**dadurch gekennzeichnet**,
daß die Verstärkereinrichtungen eine Multiplexereinrichtung (27) umfassen, welche die Ausgangssignale nacheinander abtastet und mit programmierbaren Verstärkungsfaktoren (28) zur weiteren Auswertung verstärkt.

11. Vorrichtung nach einem der Ansprüche 8-10,
**dadurch gekennzeichnet**,
daß die Photosensoren (25a-25n) aus einer Vielzahl lichtempfindlicher Abschnitte eines Halbleitersubstrats (25) gebildet sind.

12. Verwendung einer Vorrichtung nach einem der vorhergehenden Ansprüche zur Bestimmung der Anzahl von Fäden/Maschen pro Längeneinheit der Textilbahn.

## Claims

1. Device for measuring the weft thread or stitch row position in textile webs, having a backlighting or frontlighting measuring arrangement, comprising at least one lens arrangement (21) and at least one photoreceiver device (24) for measuring the light of a lighting device (10) transmitted or reflected by the test material in a substantially linear region, the measuring arrangement being constructed in such a manner as to enable monitoring of either at least two linear regions extending at an angle to one another or one linear region whose angular position is adjustable relative to the weft thread or stitch row position,
characterized in that
the lens arrangement (21) comprises a fixed cylindrical lens (40) or toroidal lens, which has a curved longitudinal axis (XT) and whose longitudinal axis (XT) in sections substantially coincides with the linear regions to be monitored.

2. Device according to claim 1,
characterized in that
the radius of lens curvature (rT) perpendicular to the longitudinal axis (XT) of the toroidal lens (40) changes from a first lens radius (rT1) in the lens centre (41) to a different second lens radius (rT2) at the lens ends (42a, 42b).

3. Device according to one of the preceding claims,
characterized in that
the longitudinal curvature of the toroidal lens (40) changes from a first radius of longitudinal curvature (RT1) in the lens centre (41) to a second, different radius of longitudinal curvature (RT2) at the lens ends (42a, 42b).

4. Device according to one of the preceding claims,
characterized in that
the photoreceiver device (24) comprises an apertured stop (23), the longitudinal axis (XS) of which extends substantially parallel to the longitudinal axis (XT) of the toroidal lens (40).

5. Device according to claim 4,
characterized in that
the width (S) of the apertured stop (23) changes from a first aperture width (S1) in the centre (45) of the apertured stop to a second, different aperture width (S2) at the ends (46a, 46b) of the apertured stop.

6. Device according to one of claims 4 or 5,
characterized in that
the apertured stop (23) is fastened in an exchangeable/adjustable manner to allow adaptation to the texture of the textile web.

7. Device according to one of the preceding claims,
characterized in that
the lens arrangement (21) is fastened in an exchangeable manner to allow adaptation to the texture of the textile web.

8. Device according to one of the preceding claims,
characterized in that
the photoreceiver device (24) comprises a plurality of photo-detectors (25a-25n), which convert the light intensity inside successive linear regions along the longitudinal axis (XT) of the toroidal lens into electrical output signals, which are combined with one another in an evaluation device (36) to produce a drafting angle signal.

9. Device according to claim 8,
characterized in that
the evaluation device (36) for the purpose of producing amplified output signals comprises amplifier devices (28), the gains of which are adjustable separately for each photo-detector (25a-25n).

10. Device according to claim 9,
characterized in that
the amplifier devices comprise a multiplexer device (27), which samples the output signals in succession and amplifies said output signals with programmable gains (28) for further evaluation.

11. Device according to one of claims 8-10,
characterized in that
the photo-detectors (25a-25n) are formed by a plurality of light-sensitive portions of a semiconductor substrate (25).

12. Use of a device according to one of the preceding claims for determining the number of threads/stitches per unit of length of the textile web.

## Revendications

1. Dispositif pour mesurer la position de fils de trame ou de rangées de mailles dans des bandes textiles, comprenant un dispositif de mesure en transparence ou en réflexion équipé d'au moins un système de lentille (21) et d'au moins un dispositif de réception de lumière (24) pour la mesure de la lumière émise par un dispositif d'éclairage (10) et transmise ou réfléchie par le produit à contrôler dans une zone sensiblement linéaire, le dispositif de mesure étant réalisé de façon à pouvoir surveiller au moins deux zones linéaires disposées sous un angle l'une par rapport à l'autre ou une zone linéaire dont la position angulaire par rapport à la position des fils de trame ou des rangées de mailles peut être réglée, **caractérisé en ce** que le système de lentille (21) comprend une lentille cylindrique (40) fixe à axe longitudinal (XT) cintré, ou lentille toroïdale, dont l'axe longitudinal (XT) coïncide sensiblement par sections avec les zones linéaires à surveiller.

2. Dispositif selon la revendication 1, caractérisé en ce que le rayon de courbure (rT) de la lentille orienté perpendiculairement à l'axe longitudinal (XT) de la lentille toroïdale (40) se raccorde avec un premier rayon de lentille (rT1) au milieu (41) de la lentille, à un second rayon de lentille (rT2) différent de celui-ci, aux extrémités (42a, 42b) de la lentille.

3. Dispositif selon l'une des revendications précédentes, caractérisé en ce que la courbure longitudinale de la lentille toroïdale (40) passe d'un premier rayon de courbure longitudinale (RT1) au milieu (41) de la lentille à un second rayon de courbure longitudinale (RT2) aux extrémités (42a, 42b) de la lentille qui diffère du premier.

4. Dispositif selon l'une quelconque des revendications précédentes, caractérisé en ce que le dispositif de réception de lumière (24) comprend un diaphragme à fente (23) dont l'axe longitudinal (XS) s'étend sensiblement parallèlement à l'axe longitudinal (XT) de la lentille toroïdale (40).

5. Dispositif selon la revendication 4, caractérisé en ce que la largeur (S) du diaphragme à fente (23) passe d'une première largeur de fente (S1) au milieu (45) du diaphragme à fente à une seconde largeur de fente (S2) différente aux extrémités (46a, 46b) du diaphragme à fente.

6. Dispositif selon l'une des revendications 4 ou 5, caractérisé en ce que, pour l'adaptation à la structure de la bande textile, le diaphragme à fente (23) est fixé de manière interchangeable/réglable.

7. Dispositif selon l'une quelconque des revendications précédentes, caractérisé en ce que, pour l'adaptation à la structure de la bande textile, le système de lentille (21) est monté de manière interchangeable.

8. Dispositif selon l'une quelconque des revendications précédentes, caractérisé en ce que le dispositif de réception de lumière (24) comprend une multiplicité de photodétecteurs (25a à 25n) qui transforment l'intensité lumineuse à l'intérieur de zones linéaires consécutives le long de l'axe longitudinal (XT) de la lentille toroïdale, en signaux de sortie électriques lesquels peuvent être combinés dans un dispositif d'évaluation (36) pour générer un signal d'angle de gauchissement.

9. Dispositif selon la revendication 8, caractérisé en ce que le dispositif d'évaluation (36) comprend pour la génération de signaux de sortie amplifiés, des systèmes d'amplification (28) dont les coefficients d'amplification peuvent être réglés séparément pour chaque photodétecteur (25a à 25n).

10. Dispositif selon la revendication 9, caractérisé en ce que les systèmes d'amplification comprennent un dispositif de multiplexage (27) qui explore successivement les signaux de sortie et les amplifie pour le traitement ultérieur avec des coefficients d'amplification (28) programmables.

11. Dispositif selon l'une des revendications 8 à 10, caractérisé en ce que les photodétecteurs (25a à 25n) sont constitués par une multiplicité de sections photosensibles d'un substrat à semiconducteurs (25).

12. Utilisation d'un dispositif selon l'une quelconque des revendications précédentes pour déterminer le nombre de fils/mailles par unité de longueur de la bande textile.
